# FASCICULE DE BREVET EUROPEEN

(11) **EP 2 367 879 B1**
(45) Date de publication et mention de la délivrance du brevet: **22.07.2015**
(21) Numéro de dépôt: 09797125.3
(22) Date de dépôt: 30.11.2009
(51) Int. Cl.: C08L 23/00

(54) **PROCEDE DE TRAITEMENT D'UN MATERIAU ISSU DE RECUPERATION ET BROYAGE**
VERFAHREN ZUR BEHANDLUNG EINES MATERIALS AUS RÜCKGEWINNUNG UND MAHLUNG
METHOD FOR TREATING A MATERIAL DERIVED FROM RECOVERY AND GRINDING

(30) Priorité: 01.12.2008 FR 0858167
(43) Date de publication de la demande: 28.09.2011
(73) Titulaire: Compagnie Plastic Omnium, 69007 Lyon (FR)
(72) Inventeur: VIOT, Frédéric, F-01450 Poncin (FR); GUILLET, Jacques, F-69210 L'Arbresle (FR); CASSAGNAU, Philippe, F-69390 Millerie (FR); MASSARDIER-NAGEOTTE, Valérie, F-69100 Villeurbanne (FR); SONNIER, Rodolphe, F-30100 Ales (FR)
(74) Mandataire: Descazeaux, Charles
(86) Numéro de dépôt international: PCT/FR2009/052341
(87) Numéro de publication internationale: WO 2010/063934

(56) Documents cités:
- WO-A2-2008/040911
- DE-A1- 4 226 516
- US-B1- 6 214 934

## Description

L'invention concerne le domaine du traitement de matériaux issus du recyclage de véhicules automobiles.

De nombreuses pièces de véhicule automobile sont réalisées en matière plastique. En fin de vie, ces pièces peuvent être récupérées et recyclées pour être utilisées dans d'autres applications.

Pour cela, une première étape consiste à trier les pièces des véhicules hors d'usage en fonction de leur matériau principal. Puis, ces pièces sont broyées et les métaux ferreux et non ferreux sont récupérés par aimantation et courants de Foucault. Le reste des matériaux broyés est appelé Résidus de Broyage Automobile (RBA). Ces résidus de broyage contiennent généralement un mélange de différentes matières plastiques, par exemple de polypropylène (PP) et de polyéthylène (PE), et de divers autres matériaux tels que du bois, des mousses diverses, des tissus...).

Pour pouvoir être recyclés et réutilisés, il est préférable que les résidus de broyage soient les plus purs possible, c'est-à-dire qu'il contiennent en grande majorité un seul type de matière plastique. En effet, la présence de plusieurs matières plastiques dans les résidus confèrent généralement des propriétés physiques et mécaniques moins bonnes que celles d'un matériau quasiment pur.

En particulier, la présence de polyéthylène mélangé dans du polypropylène altère les propriétés mécaniques du polypropylène telles que la résistance aux chocs ou l'allongement à la rupture.

C'est la raison pour laquelle une étape supplémentaire de traitement des résidus de broyage est nécessaire pour faire diminuer la quantité relative de polyéthylène par rapport au polypropylène. On souhaite généralement obtenir un mélange comprenant moins de 5 % de polyéthylène.

Actuellement, ce traitement est relativement complexe et coûteux à mettre en oeuvre puisqu'il consiste, soit à mettre en place des systèmes de tri perfectionnés visant à séparer le polyéthylène du polypropylène, soit à diluer les mélanges de polypropylène et de polyéthylène dans du polypropylène vierge dont le prix de revient est élevé.

L'invention a notamment pour but de fournir un procédé de traitement d'un matériau issu de recyclage comprenant un mélange de polypropylène et de polyéthylène qui soit plus simple et plus économique que les procédés connus.

A cet effet, l'invention a pour objet un procédé de traitement d'un matériau issu de récupération et broyage comprenant un mélange de polypropylène et de polyéthylène, dans lequel on mélange le matériau avec 1 à 5 % en masse de copolymère de type éthylène-α-oléfine.

Des essais ont montré que l'ajout, dans un mélange de polypropylène et de polyéthylène, d'un copolymère de type éthylène-α-oléfine dans une faible proportion comprise entre 1 à 5 %, permet d'obtenir un matériau dont les performances mécaniques sont sensiblement identiques à celles d'un polypropylène vierge. Le copolymère à un effet de compatibilisation du mélange de polypropylène et de polyéthylène.

Cette opération de traitement s'avère particulièrement simple et économique par rapport aux procédés de traitement connus dans l'état de la technique et permet d'aboutir à un matériau ayant quasiment les mêmes propriétés qu'un polypropylène vierge. Par ailleurs, le procédé de l'invention permet de traiter des matériaux dont la quantité de polyéthylène peut atteindre 30%.

La quantité de copolymère à ajouter au mélange n'a pas besoin d'être grande et peut être limitée à 5 %.

En effet, du fait que le matériau est issu de récupération et broyage, il comprend une faible proportion d'élastomère in situ issu de la polymérisation du polypropylène lors de la synthèse de celui-ci.. Ces traces d'élastomère dans le mélange facilitent l'effet compatibilisant du copolymère, même mélangé en faible quantité.

Si le mélange de polypropylène et de polyéthylène avait été réalisé à partir d'un polypropylène vierge, c'est-à-dire d'un polypropylène non issu de récupération et broyage, une quantité plus importante, par exemple supérieure à 20 %, de copolymère aurait été nécessaire pour restaurer les propriétés mécaniques du polypropylène perdues lors de son mélange avec le polyéthylène. En effet, en l'absence de traces d'élastomère issu de la polymérisation du polypropylène, l'effet compatibilisant du copolymère est moins important.

Ainsi, ce procédé de traitement d'un mélange de polypropylène et de polyéthylène est particulièrement adapté au traitement de matériaux issus de récupération et broyage puisque la quantité de copolymère de type éthylène-α-oléfine à ajouter dans ce cas est relativement faible.

Une fois que le matériau issu de broyage a été traité par le procédé de l'invention, le produit résultant de ce procédé de traitement peut être utilisé pour fabriquer différentes pièces, telles que par exemple de nouveaux pare-chocs, ou d'autres applications pour lesquelles les performances mécaniques du matériau jouent un rôle important.

Un procédé selon l'invention peut en outre comprendre l'une ou plusieurs des caractéristiques suivantes.
- Le matériau est issu de résidus de broyage automobile ou de toute autre source de polypropylène pollué par du polyéthylène comme par exemple des déchets d'équipements électriques et électroniques. Comme indiqué en introduction, de nombreuses pièces d'un véhicule automobile peuvent être recyclées. Par exemple, des pièces de carrosserie telles que des pare-chocs et des réservoirs à essences sont réalisées majoritairement en polypropylène et en polyéthylène, et le résultat de leur broyage sous forme de broyats de quelques centimètres carrés peut être retraité par le procédé de l'invention.
- Le copolymère de type éthylène-α-oléfine est choisi parmi l'un quelconque des éléments de l'ensemble constitué par de l'éthylène-octène et de l'éthylène-butène. Ces deux matériaux sont particulièrement bien adaptés à la mise en oeuvre du procédé pour compatibiliser un mélange de polypropylène et de polyéthylène.
- Le polypropylène est un polypropylène homopolymère ou copolymère
- Le polyéthylène est un polyéthylène basse, moyenne ou haute densité

L'invention a également pour objet une pièce de véhicule automobile réalisée en un matériau comprenant du polypropylène, du polyéthylène, et 1 à 5 % en masse de copolymère de type éthylène-α-oléfine.

En d'autres termes, l'invention concerne une pièce de véhicule automobile réalisée en un matériau issu du procédé de traitement selon l'invention.

Une pièce de véhicule automobile selon l'invention peut, avantageusement, être réalisée avec du polypropylène et du polyéthylène issus de résidus de broyage automobile.

Par ailleurs, la pièce de véhicule automobile peut être une pièce de carrosserie.

L'invention sera mieux comprise à la lecture de la description qui va suivre, donnée uniquement à titre d'exemple.

Le polypropylène est un matériau couramment utilisé pour la fabrication de pièces de véhicule automobile. Ce matériau est particulièrement intéressant car ses caractéristiques de résistance mécanique sont élevées. Pour un polypropylène vierge classique, la contrainte à la rupture est de l'ordre de 19 mégapascals (MPa), et sa déformation à la rupture est de l'ordre de 500 %.

Lorsque l'on réalise ces mêmes tests de résistance à la rupture et à l'allongement avec du polypropylène issu de résidus de broyage automobile, c'est-à-dire du polypropylène mélangé avec une quantité importante de polyéthylène, on constate que la contrainte à la rupture est de l'ordre de 16 MPa et que la déformation à la rupture est de l'ordre de 115 %.

La présence de polyéthylène dans un polypropylène, notamment dans des résidus de broyage automobile, altère donc considérablement les propriétés mécaniques du polypropylène.

L'invention propose de mélanger une quantité comprise entre 1 et 5 % de copolymère de type éthylène-α-oléfine dans un matériau issu de résidus de broyage automobile comprenant un mélange de polypropylène et de polyéthylène pour obtenir un matériaux dont les propriétés mécaniques sont proches de celles d'un polypropylène vierge.

Le copolymère de type éthylène-α-oléfine utilisé peut être par exemple de l'éthylène-octène ou de l'éthylène-butène.

Des essais ont été réalisés en mélangeant des résidus de broyage automobile avec 5 % d'éthylène-α-oléfine. Les résultats de ces essais montrent que le matériau issu de ce traitement possède une contrainte à la rupture d'environ 20 MPa et une déformation à la rupture d'environ 600 %.

On constate par conséquent qu'en ajoutant 5 % de copolymère dans un matériau issu de résidus de broyage automobile, on obtient un matériau dont les propriétés mécaniques sont sensiblement identiques, voire meilleures, que celles d'un polypropylène vierge.

Ainsi, le procédé de traitement de l'invention permet de recycler efficacement et de manière simple du polypropylène issu de résidus de broyage automobile, de résidus de broyage issus de déchets d'équipements électriques et électroniques (DEEE) ou de toute autre source de polypropylène, dont le mélange avec du polyéthylène altère les propriétés mécaniques.

L'invention a été décrite en relation au domaine technique automobile. Bien entendu elle s'applique également à d'autres domaines techniques dans lesquels on a besoin de recycler des pièces réalisées en polypropylène et en polyéthylène pour des applications nécessitant des performances mécaniques proches de celles d'un PP vierge.

## Revendications

1. Procédé de traitement d'un matériau issu de récupération et broyage comprenant un mélange de polypropylène et de polyéthylène, **caractérisé en ce qu'**on mélange le matériau avec 1 à 5% en masse de copolymère de type éthylène-α-oléfine.

2. Procédé selon la revendication précédente, dans lequel le matériau est issu de résidus de broyage automobile ou de toute autre source de polypropylène pollué avec du polyéthylène.

3. Procédé selon l'une quelconque des revendications précédentes, dans lequel le copolymère de type éthylène-α-oléfine est choisi parmi l'un quelconque des éléments de l'ensemble constitué par de l'éthylène-octène et de l'éthylène-butène.

4. Procédé selon l'une quelconque des revendications précédentes, dans lequel le polypropylène est un polypropylène homopolymère ou copolymere

5. Procédé selon l'une quelconque des revendications précédentes, dans lequel le polyéthylène est un polyéthylène basse, moyenne ou haute densité.

6. Pièce de véhicule automobile **caractérisée en ce qu'**elle est réalisée en un matériau comprenant :
- du polypropylène,
- du polyéthylène,
- 1 à 5% de copolymère de type éthylène-α-oléfine, et
- **caractérisée en ce que** le mélange de polypropylène et le polyéthylène est issu de résidus de broyage, notamment de résidus de broyage automobile, le polypropylène de ce mélange ayant une contrainte à la rupture plus faible qu'un polypropylène vierge, et une déformation à la rupture plus faible qu'un polypropylène vierge, et **en ce que** le polypropylène du mélange a une contrainte à la rupture de l'ordre de 16 MPa, et une déformation à la rupture de l'ordre de 115%.

7. Pièce de véhicule automobile selon l'une des revendications 6 et 7, du type pièce de carrosserie.

## Patentansprüche

1. Verfahren zur Behandlung eines aus Rückgewinnung und Zerkleinerung stammenden Werkstoffs, der ein Gemisch aus Polypropylen und Polyethylen enthält, **dadurch gekennzeichnet, dass** der Werkstoff mit 1 bis 5 Maste-% eines Copolymeres vom Typ Ethylen-α-Olefin gemischt wird.

2. Verfahren nach dem vorhergehenden Anspruch, bei dem der Werkstoff aus Kraftfahrzeug-Zerkleinerungsrückständen oder jeder anderen mit Polyethylen belasteten Polypropylenquelle stammt.

3. Verfahren nach einem der vorhergehenden Ansprüche, bei dem das Copolymer vom Typ Ethylen-α-Olefin gewühlt ist aus einem der Elemente des Komplexes, der von Ethylen-Octen und Ethylen-Buten gebildet ist.

4. Verfahren nach einem der vorhergehenden Ansprüche, bei dem das Polypropylen ein homopolymeres oder copolymeres Polypropylen ist.

5. Verfahren nach einem der vorhergehenden Ansprüche, bei dem das Polymethylen ein Polyethylen niedriger, mittlerer oder hoher Dichte ist.

6. Kraftfahrzeugteil, **dadurch gekennzeichnet, dass** es aus einem Werkstoff realisiert ist, der Folgendes enthalt:
- Polypropylen,
- Polyethylen,
- 1 bis 5 Masse-% eines Copolymers vom Typ Ethylen-α-Olefin, und
- **dadurch gekennzeichnet, dass** das Gemisch aus Polypropylen und Polymethylen aus Zerkleinerungsrückständen stammt, insbesondere aus Kraftfahrzeug-Zerkleinerungsrückständen, wobei das Polypropylen dieses Gemischs eine geringere Bruchspannung hat hals ein reines Polypropylen und eine geringere Bruchdehnung hat hals ein reines Polypropylen, und dass das Polypropylen dieses Gemischs eine Bruchspannung in der Größenordnung von 16 MPa und eine Bruchdehnung in der Größenordnung von 115 % hat.

7. Kraftfahrzeugteil nach einem der Ansprüche 6 bis 7 vom Typ Karosserieteil.

## Claims

1. A method of treating a material derived from recovery and shredding, the material comprising a mixture of polypropylene and of polyethylene, **characterized in that** the material is mixed with 1% to 5% by weight of copolymer of the ethylene-α-olefin type.

2. A method according to the preceding claim, wherein the material is derived from automobile shredding residue or from any other source of polypropylene polluted with polyethylene.

3. A method according to claim 1, wherein the copolymer of ethylene-α-olefin type is selected from any of the items of the group constituted by ethylene-octene and ethylene-butene.

4. A method according to claim 1, wherein the polypropylene is a homopolymer or copolymer polypropylene.

5. A method according to claim 1, wherein the polyethylene is a low, medium, or high density polyethylene.

6. A motor vehicle part, **characterized in that** it is made of a material comprising:
- polypropylene;
- polyethylene; and
- 1% to 5% by weight of copolymer of ethylene-α-olefin type, and
**characterized in that** the mixture of polypropylene and polyethylene are derived from shredder residue, particularly automobile shredder residues, polypropylene of said mixture having a breaking stress lower than virgin polypropylene and a breaking deformation weaker than virgin polypropylene, and **in that** the polypropylene of said mixture has a breaking stress of about 16 MPa, and a breaking deformation of about 115%.

7. A motor vehicle part according to claim 6, of the bodywork part type.
